Europäisches Patentamt

European Patent Office

Office européen des brevets

(19)

(11) Publication number: **0 116 524**
**A2**

(12) **EUROPEAN PATENT APPLICATION**

(21) Application number: **84850017.9**

(22) Date of filing: **17.01.84**

(51) Int. Cl.³: **C 04 B 13/00**

(30) Priority: **08.02.83 SE 8300652**

(43) Date of publication of application:
**22.08.84 Bulletin 84/34**

(84) Designated Contracting States:
**AT BE CH DE FR GB IT LI NL SE**

(71) Applicant: **Allmän Byggnadsservice AB**
**Frykdalsbacken 28**
**S-123 43 Farsta(SE)**

(72) Inventor: **Alexanderson, Johan**
**Tegnérgatan 7**
**S-111 40 Stockholm(SE)**

(72) Inventor: **Säfström, Bo**
**Essingestraket 37**
**S-116 66 Stockholm(SE)**

(74) Representative: **Burman, Tore et al,**
**Bergling & Sundbergh AB P.O. Box 7645**
**S-103 94 Stockholm(SE)**

(54) **Building material.**

(57) A levelling agent intended for smoothing off an uneven substructure, including a hydraulic binder, filler and sand together with an elasticity-increasing agent and an agent for rheologic control flow additive. The liquid filler contains gypsum in an amount active for reduced shrinkage, preferably together with a gypsum retarder for delaying setting of the gypsum.

EP 0 116 524 A2

BUILDING MATERIAL

The present invention relates to a levelling agent intended for smoothing off an uneven substructure. The levelling agent in accordance with the invention is based on the contents of a conventional hydraulic binding agent such as cement, filler and sand and further contains means for increasing elasticity and for providing the desired rheological properties.

Screeding, e.g. of concrete structural floors for providing a surface which is sufficiently smooth for a surface covering is a well-known problem in the building industry. It is generally known that every little irregularity in a concrete substructure comes through very clearly on the upper side of plastic floor covering laid over the substructure after the covering has been in use for a while. A technique, that has been used for a long while, for evening-off the supporting concrete is to provide it with a relatively thick layer of mortar.   This known solution of the problem has substantial disadvantages however, among which may be mentioned that the weight of the structure itself increases by about 100 kg/m$^2$, the height of the structure also increasing without increased carrying capacity being achieved.

Another principle used in making the upper surface of a concrete substructure sufficiently smooth for later use has been to attempt to provide a sufficiently smooth surface of the concrete material itself, e.g. by using vibration during pouring, machine floating or the like, but in practice this technique has not been found to function satisfactorily at all.

So-called levelling agents have been developed lately, these being self-smoothing screeding compositions having a viscosity low enough for them to be pumped and flow out by themselves into a smooth surface. This technique signifies substantial rationalization with accompanying time and cost gains, but levelling agents known up to now have certain disadvantages in practical use.

In the utilization of a levelling agent, a well-adjusted balance is required between viscosity on one hand, so that satisfactory flowing together is obtained between contiguous areas provided in turn with levelling agent, and sedimentation resistance in the agent on the other hand, such resistance being a prerequisite for the avoidance of impoverishment of the surface layer in the applied levelling agent in respect of solid constituents. The desired flowing toghether requires a relatively low-viscosity levelling agent, whereas the sedimentation resistance presupposes a given lowest viscosity for avoiding separation and impoverishment of the surface layer in the applied levelling agent.

Other properties which are essential to the levelling agent are low shrinkage and good adherence, such that the formation of cracks and release from the substructure are avoided. It is also desirable to have good surface strength so that the cured surface layer can resist loads, e.g. such as those caused by rolling office chair wheels, or industrial machines or the like.

Some of the prior art levelling agents may have satisfactory properties per se, but certain additives in the known materials give undesired side effects or resultant effects, however, these effects, coming primarily from released ammonia, may for example result in discoloration of the wood--based material placed on the treated surface. Attempts have been made to exchange the additives used, which are burdened with these drawbacks, for other materials, but sufficiently low shrinkage in combination with satisfactory balance between viscosity and sedimentation resistance has so far not been attained.

The present invention has for an object of providing a levelling agent, in which the disadvangates in the prior art are avoided, and which has improved balance between viscosity on the one hand and sedimentation resistance on the other hand, as well as having low shrinkage and good adherence.

In conjunction with development and research, which has led to the present invention, it has now been surprisingly found that the addition of gypsum to the liquid filler of the type in question resulsts in acceptably low shrinkage, and thereby small risk of cracking and release from the substructure. For preventing too rapid setting caused by the gypsum content, it is preferred to add, in addition to the gypsum, a retarder, the retarder having the function of delaying setting of the gypsum.

The levelling agent in accordance with the present invention thus contains as solid constituents a hydraulic binder, e.g. Portland cement, filler and sand together with a polymer having the function of increasing elasticity, and a viscosity additive for providing satisfactory rheological properties and gypsum, preferably together with a retarder therefor.

The hydraulic binder included in the levelling agent of the invention is no critical component in the levelling agent, but may be any conventional binder, e.g. Portland cement, aluminate cement etc.

Filler and sand included in the levelling agent similarly constitute conventional materials, the character of which is not critical for the invention. Examples of fillers are so-called dolomite fillers, fly ash, etc.

With regard to the proportions by weight between the three conventional components included, i.e. binder, filler and sand, these may also vary within conventionally applicable ranges. Calculated on 1000 kg dry constituents in the levelling agent of the invention, the binder proportion may vary between about 100 and about 500, the filler between about 100 and about 500 and the sand between about 200 and about 600.

The elasticity-increasing polymer in the levelling agent of the present invention is not critical in character as long as it provides the desired function in the agent, namely increasing the elasticity of the cured agent. The polymer can be added in dry form or in the form of an aqueous dispersion. In the former case it is preferred to use a homo- or copolymerisate of vinyl acetate.

As examples of particularly preferred polymers of this type there may be mentioned copolymers of vinyl acetate and vinyl versatate, copolymers of ethylene and vinyl acetate, copolymers of vinyl acetate and vinyl laurate, copolymers of vinyl acetate, vinyl laurate and vinyl versatate, homopolymers of only vinyl acetate etc.

The proportion of polymer in the levelling agent of this invention may vary within relatively wide limits, depending on the intended use of the surface layer provided with the aid of the levelling agent. The lower limit constitutes the limit below which essential elasticity-increasing effect is not attained. In general it is preferred to use at least about 5 parts by weight calculated on the same basis as given above, i.e. per 1000 kg dry constituents in the levelling agent. The upper limit may be dependent on economic factors, and in general there is no advantage in substantially exceeding 100 parts by weight of polymer per 1000 kg dry constituents.

With the addition of the polymer in the form of an aqueous dispersion it is preferred to use some form of acrylate resin, i.e. polymers or copolymers of acrylic acid, methacrylic acid, esters of these acids or acrylonitrile. Among such polymers there may be mentioned polymers of $C_{1-4}$ alkyl esters of acrylic acid or methacrylic acid, such as methyl, ethyl or butyl esters. Polymers of styrene or copolymers of styrene and acrylates may also be used. There may also be mentioned styrene-butadienes, vinyl propionates and acrylonitrile-butadienes. The same conditions apply as given above concerning the amount of polymer added in the form of an aqueous dispersion, the amount being based on the content of solid polymer constituents in the dispersion.

The co-called flow additive in the levelling agent of this invention has the function of regulating the rheological properties of the levelling agent composition, i.e. its behaviour in conjunction with the application of a surface layer. A plurality of resins are suitable for the purpose, but particularly preferred is the use of formaldehyde resins of different kinds, e.g. sulphonated melamine formaldehyde resins, sulphonated naphthalic acid-formaldehyde resins, or salts of resins of this kind. Particularly preferred are sulphonated melamine formaldehyde resins, e.g. Peramin® (Perstorp, Sweden), Melment® (Hoechst, West Germany).

The so-called flow additive is added in a relatively small amount, suitably from about 1 to about 10 parts by weight per 1000 kg total dry constituents in the liquid filler. As with the polymer additive, the lower limit is set by the quantity of the flow additive required for providing the desired effect. For quantities exceeding about 10 parts by weight and calculated on 1000 kg dry constituents of the agent, no particular further effect is obtained, and in practice the quantity of flow additive is therefore limited, for economic reasons, to this latter proportion. In practice flow additive is used in the form of a dry powder, but it is also conceivable to add it in the form of a solution at the occasion of admixture, e.g. a solution containing 20% solid constituents.

It may also be suitable to add a defoaming agent in the levelling agent of this invention, this agent having the function of reducing the content of air in the levelling agent mass. This additive is also conventional as to its nature and does not per se constitute any characterizing feature of the invention. A plurality of defoaming agents are conceivable, e.g. mixtures of polyoles and hydrocarbon oils, polyether stearates, fatty acid polyglycol esters and fatty alcohols, silicone oil emulsions, mineral oils containing metal soaps, polyethers and emulsifies, etc. All such substances are commercial products available on the market.

The content of gypsum in the levelling agent of this invention may vary within fairly wide limits. The lower limit is determined by the need of supplying to the levelling agent an amount active for satisfactory reduction of shrinkage. In general gypsum is added in an amount of at least about 5 kg per 1000 kg dry constituents in the levelling agent. A suitable upper limit is approximately 10 times as much, i.e. about 50 kg per 1000 kg. The amounts given here are based on anhydrous calcium sulphate.

To avoid too rapid setting of the levelling agent of this invention, in the form as presented for application, it is preferred to add a so-called retarder, having the function of delaying setting of the gypsum. The retarder is of a conventional kind and may be for example a lignosulphonate, a carboxylic acid or salt thereof or n-polyoxymethyene amino acid, preferably a calcium salt thereof. The amount which is added to the levelling agent is comparatively small, since the delaying function already occurs at very small quantities. An amount in the order of magnitude of a tenth part by weight up to some parts by weight calculated on 1000 kg. dry constituents is suitable in practice, but even smaller amounts down to some hundredths of parts by weight can be sufficient. In general, the quantity of added retarder is within the range of about 0.05 to about 5 parts by weight calculated on the same basis as before.

In manufacturing levelling agents in accordance with the present invention, the binder and ballast are suitably mixed first. Polymer, flow additive, defoamer, gypsum and retarder may then be mixed together separately and subsequently mixed into the dry mixture of binder and ballast. Water is added to the composition in such an amount that the latter is given a consistency suitable for applying a surface layer. The consistency can be measured by the composition being poured into a ring, e.g. of a diameter of 50 mm and a height of 22 mm, subsequent to which the ring is lifted and the composition flows out on a dry plate, e.g. of glass. The diameter of the mass which thus flows out is then used as a measure of the consistency. A suitable diameter after the levelling agent mass has flowed is about 175 mm, but his figure may, of course, vary both upwards and downwards depending on the site of application.

With a suitable consistency of the mass, it can be applied by pumping, e.g. on a concrete substructure, and flows then out into a smooth surface, which is not necessarily horisontal. The layer thickness on producing a surface layer during using the levelling agent in accordance with the invention may vary from some millimeters, but is normally within the range 5 to 20 mm.

The invention will now be described in the following by non-limiting examples.

Example 1

A dry levelling agent mixture is mixed in a mixer for two minutes and contains the following constituents:

| | | |
|---|---|---|
| Portland cement | 250 | kg |
| Fly ash | 350 | kg |
| Sand 0-0.5 mm | 332.7 | kg |
| Gypsum | 25 | kg |
| Gypsum retarder (Retardan P) | 0.3 | kg |
| Polymer powder (Vinapol® 1070) | 30 | kg |
| Flow additive (Peramin®) | 7 | kg |
| Defoamer | 5 | kg |
| Total | 1000 | kg |

The polymer powder was a spray-dried copolymer of vinyl acetate and vinyl versatate. The flow additive was of the melamine resin type.

The dry powder was then mixed with 24% by weight of water in a continuous mixing-pump, after which it was pumped out onto a uneven concrete substructure, which had been previously treated with a diluted plastics dispersion. Pumping took place with a capacity of 300 $m^2$/h to an approximate average thickness of 5-7 mm. The flow capacity of the levelling agent was measured with the aid of a ring having an inner diameter of 50 mm and a height of 22 mm. The ring was filled with levelling agent and after lifing up the ring the levelling agent was allowed to flow out onto a glass plate, and the diameter after flowing was measured as 175 mm. After the levelling agent had been pumped out onto the concrete substructure, it formed an extremely smooth surface without any manual screeding being required. It was possible to walk on the surface after 24 hours, and the impression resistance according to Swedish Standard 923505 was then 0.8 mm. After drying for two weeks the impression resistance was 0.15 mm. No formation of cracks or release from the substructure could be noted. The surface was then covered with flooring.

The resistance of the filler to wear was tested by providing an ordinary pavement slab with a 7 mm thick layer of levelling agent which after a drying period of 21 days was provided with a PVC-mat by glueing onto the layer, after half the surface had been ground with a carborundum stone. A week after glueing of the mat, the slab was loaded with a rolling office chair wheel, which traversed the slab 10,000 times with a load of 250 N. After this test adherence was measured between the PVC-mat and the levelling agent, and in no case it was found to be below 0.8 MPa. The test was carried out in accordance with Swedish Standard SS 923507. Furthermore, shrinkage of the levelling agent was tested on drying out at 50% relative humidity (RF) and at $20^{\circ}$C. This was found to be 1.1 o/oo after 28 days.

The strengh of the levelling agent was tested conventionally, using prisms 40 x 40 x 160 mm. The flexural tensile strength was 7.5 MPa and the compressive strength was 22 MPa.

Example 2

Dry levelling agent powder was mixed as in Example 1 with the following constituents:

| | | |
|---|---|---|
| Portland cement | 400 | kg |
| Fly ash | 140 | kg |
| Sand 0-0.5 mm | 356.7 | kg |
| Gypsum | 30 | kg |
| Gypsum retarder | 0.3 | kg |
| Polymer powder | 60 | kg |
| Flow additive | 8 | kg |
| Defoamer | 5 | kg |
| Total | 1000 | kg |

The raw materials were the same as in Example 1. Mixing and pumping out took place in the same way as well. Flow capacity was measured to 170 mm. The impression resistance after 24 hours was 0.6 mm and after a month it was 0.07 mm. No crack formation or release from the substructure could be noted. Since this levelling agent was intended for heavy wear in an industrial location it was not provided with any floor covering.

The resistance to wear was tested according to Swedish Standard SS 923508. This is similar to the test in Example 1, with the difference that a steel wheel was used and the load was considerably higher, namely 2000 N. No wear at all could be noted after carrying out the test. Measurement of the surface profiles before and after the wear test showed lowering of the profile by at most 0.2 mm by compression, (i.e. no wear).

Shrinkage and strength of the levelling agent was tested as in Example 1 and gave the following values: Shrinkage 1.2 o/oo, compressive strength 37 MPa and flexural tensile strength 10.5 MPa.

Example 3

Levelling agent was manufactured and tested in the same way as in Example 2, but with the sole difference that the polymer in it was not included in the dry powder but was added in the form of an aqueous dispersion during mixing. An acrylate-type polymer was used in this case.

The results of laying and the tests thereon were entirely comparable with those accounted for in Example 2.

Example 4

Levelling agent was manufactured and applied as in Example 1 but with the difference that the cement constituted aluminate cement instead of Portland cement. Material property tests were extended with an impression test after a setting time of two hours, the impression resistance being 0.7 mm and it was possible to walk on the surface. After 24 hours the impression resistance was 0.3 mm and after 14 days it was 0.12 mm.

For the remainder, the results of laying and tests thereon were comparable with the ones accounted for in Example 1.

CLAIMS

1. A levelling agent intended for smoothing off uneven substructures, including a hydraulic binder, filler and sand as well as an elasticity-increasing agent and an agent for rheologic control (flow additive), characterized in that it contains gypsum in an amount active for reduced shrinkage, preferably together with a gypsum retarder for delaying setting of the gypsum.

2. Agent as claimed in claim 1, characterized in that the elasticity-increasing agent includes a homo- or copolymerisate of vinyl acetate.

3. Agent as claimed in claim 1, characterized in that the elasticity-increasing agent includes a homo- or copolymer selected among the acrylates and styrene.

4. Agent as claimed in any of the preceding claims, characterized in that the elasticity-increasing agent is included in an amount of about 5 to 100 parts by weight calculated on 1000 parts by weight dry constituents in the agent.

5. Agent as claimed in any of the preceding claims, characterized in that the flow additive includes a sulphonated formaldehyde resin of melamine or naphthalic acid, possibly in the form of a salt.

6. Agent as claimed in any of the preceding claims, characterized in that the flow additive is included in an amount of about 1 to about 10 parts by weight calculated on 1000 parts by weight dry constituents in the agent.

7. Agent as claimed in any of the preceding claims, characterized in that the gypsum is included in an amount of about 5 to about 50 parts by weight calculated on 1000 parts by weight of dry constituents in the agent.

8. Agent as claimed in any of the preceding claims, characterized in that it contains a defoamer.

9. Agent as claimed in any of the preceding claims, characterized in that the retarder is included in an amount of up to some parts by weight calculated on 1000 parts by weight dry constituents in the agent.

10. Agent as claimed in claim 2, characterized in that the polymer is applied in the form of a dry powder.

11. Agent as claimed in claim 3, characterized in that the polymer has been applied in the form of an aqueous dispersion.